# EUROPÄISCHE PATENTANMELDUNG

(11) **EP 1 614 811 A1**
(43) Veröffentlichungstag der Anmeldung: **11.01.2006**
(21) Anmeldenummer: 04015864.4
(22) Anmeldetag: 06.07.2004
(51) Int. Cl.: E02B 3/10

(54) **Dammbauelement**

(71) Anmelder: Sager, Bruno, 6123 Geiss (CH)
(72) Erfinder: Sager, Bruno, 6123 Geiss (CH)
(74) Vertreter: Wagner, Wolfgang Heribert

(57) **Zusammenfassung**

Ein Dämmelement umfasst einen Behälter (1) mit quadratischem, an der Unterseite genopptem Boden (2) aus Gummi und einer Seitenwand (3), die aus rechteckigen vom Boden (2) bis zu einem oberen Rand des Behälters (1) durchgehenden Wandabschnitten (13) besteht, mit beschichteten Sperrholzplatten, welche in von einer Aussenfolie und einer Innenfolie aus Polypropylen gebildeten, durch Nähte abgetrennten Säcken angeordnet und so zusammengehalten sind, dass die Seitenwand (3) zusammenlegbar ist. Der Behälter (1) ist durch die Ecken abschneidende Planen (14) versteift und durch einen steifen Deckel mit einer Oeffnung verschliessbar. Eine Innenverkleidung aus Folie mit einer verschliessbaren Oeffnung über dem Boden (2) macht das Dämmelement wasserdicht. Mehrere Dämmelemente werden in einer Reihe oder mehreren unmittelbar hintereinander angeordneten Reihen verschiedener Höhen aufgestellt, durch Schlaufen und Haken tragende Gurte zu einer Dämmeinrichtung verbunden und mit Wasser befüllt. An der Wasserseite ist eine wasserdichte Aussenverkleidung aus Folie angeordnet.

## Beschreibung

### Technisches Gebiet

Die Erfindung betrifft ein Dämmelement sowie eine derartige Dämmelemente umfassende Dämmeinrichtung, wie sie zur Eindämmung von Flüssigkeiten, insbesondere von Wasser bei Ueberschwemmungen eingesetzt werden.

### Stand der Technik

Es sind zahlreiche schlauchförmige Dämmelemente bekannt, welche zu Dämmeinrichtungen verbunden werden können, z.B. aus WO 01/29 327 A1 oder US 5 059 065 A1. Damit solche Dämmelemente eine ausreichend grosse Höhe erreichen, müssen sie sehr gross sein, was ein verhältnismässig hohes Gewicht zur Folge hat. Sie eignen sich daher nicht für alle Umstände, z.B. beschränkten Platz und schlechte Zugänglichkeit des Einsatzortes.

Ein gattungsgemässes Dämmelement ist aus US 6 059 491 A bekannt. Es ist als im wesentlichen geschlossener länglicher Behälter aus Kunststoff von ungefähr trapezförmigem Querschnitt ausgebildet, der mit Wasser befüllt werden kann. Mehrere Dämmelemente können gelenkig zu einer Dämmeinrichtung verbunden werden. Das Dämmelement ist starr und daher verhältnismässig sperrig und schwer zu handhaben und nimmt bei Lagerung viel Platz ein.

Ein grundsätzlich ähnliches, ebenfalls zum Aufbau grösserer Dämmeinrichtungen geeignetes Dämmelement ist aus US 6 672 800 B2 bekannt. Es ist jedoch schlauchartig ausgebildet, d.h. es besteht aus flexiblem Material und ist daher zusammenlegbar. Durch innere Verspannungen mit Kabeln o.dgl. nimmt es ebenfalls einen etwa trapezförmigen Querschnitt an, wenn es mit Luft oder Wasser gefüllt wird. In der Regel ist ein Befüllen mit Luft erforderlich, bevor die Dämmelemente im Gelände ausgerichtet und dann mit Wasser befüllt werden können. Dies stellt einen zusätzlichen Arbeitsgang dar, der die Aufstellung erschwert und verzögert. Ausserdem sind die im wesentlichen aus textilem Material bestehenden Dämmelemente verhältnismässig leicht zu beschädigen und nicht vandalensicher.

### Darstellung der Erfindung

Der Erfindung liegt die Aufgabe zu Grunde, ein gattungsgemässes Dämmelement anzugeben, das ein geringes Lagervolumen aufweist, aber gleichwohl mechanisch stabil sowie leicht und rasch handhabbar ist. Ausserdem soll eine Dämmeinrichtung angegeben werden, die sehr stabil ist, dabei aber rasch aufgebaut werden kann und somit schnell einsetzbar ist.

Diese Aufgaben werden durch die Merkmale im Kennzeichen des Anspruchs 1 bzw. durch die Merkmale des Anspruchs 18 gelöst. Das erfindungsgemässe Dämmelement ist zwar zusammenlegbar, weist aber doch eine feste Struktur auf, so dass es beim Einsatz im Gelände angeordnet und ausgerichtet werden kann, ohne dass es dazu befüllt werden müsste. Erfindungsgemässe Dämmelemente können rasch zu einer erfindungsgemässen Dämmeinrichtung zusammengestellt und verbunden werden.

### Kurze Beschreibung der Zeichnungen

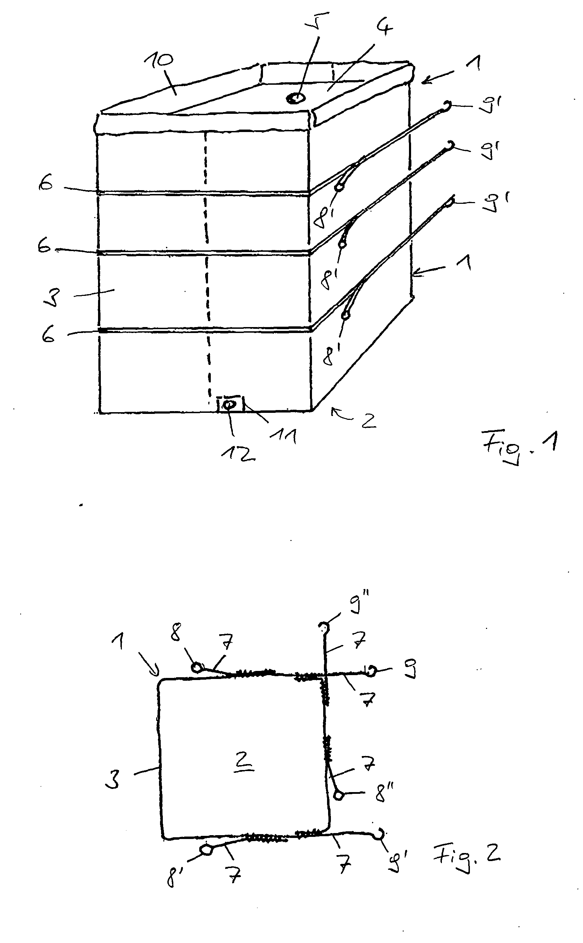

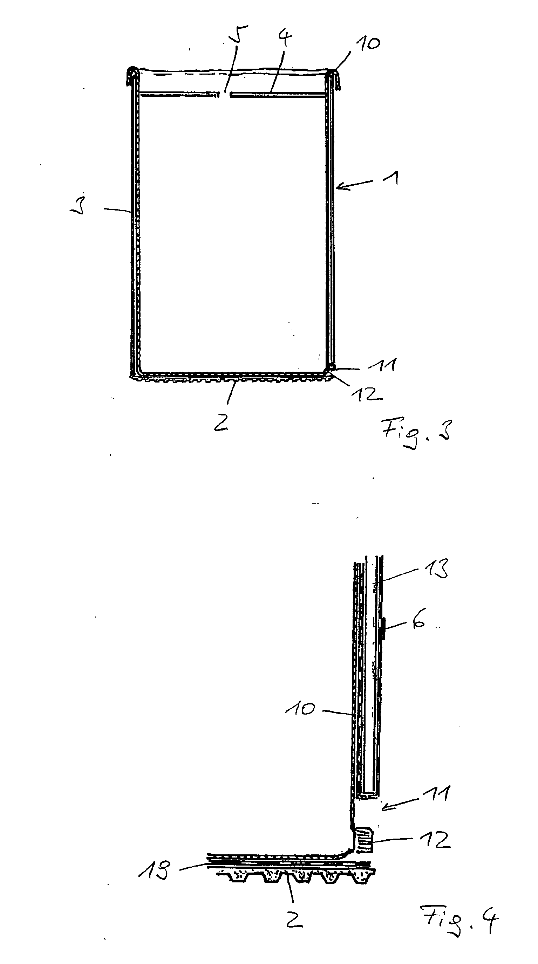

Im folgenden wird die Erfindung anhand von Figuren, welche lediglich ein Ausführungsbeispiel darstellen, näher erläutert. Es zeigen
- Fig. 1: ein erfindungsgemässes Dämmelement in perspektivischer Darstellung,

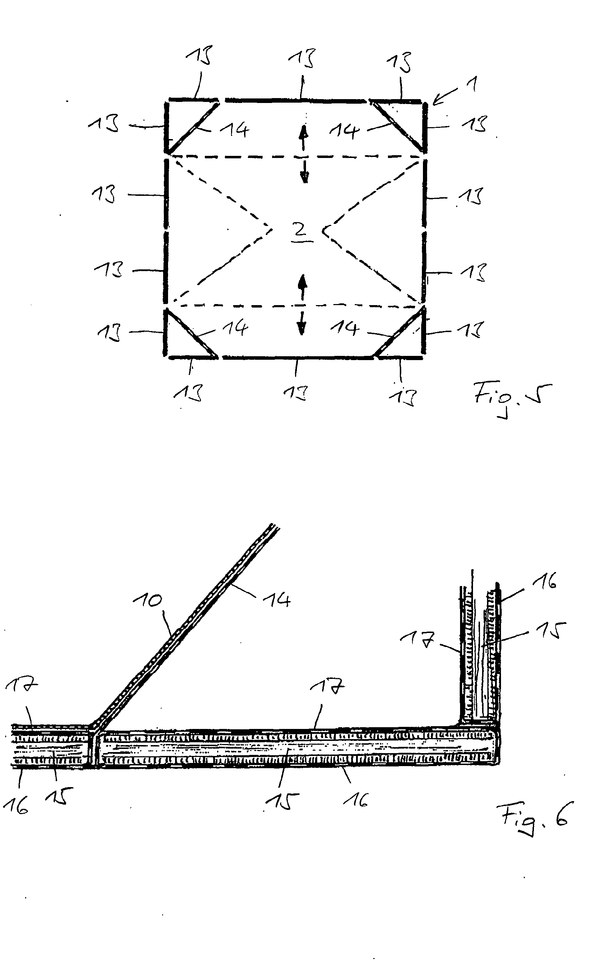

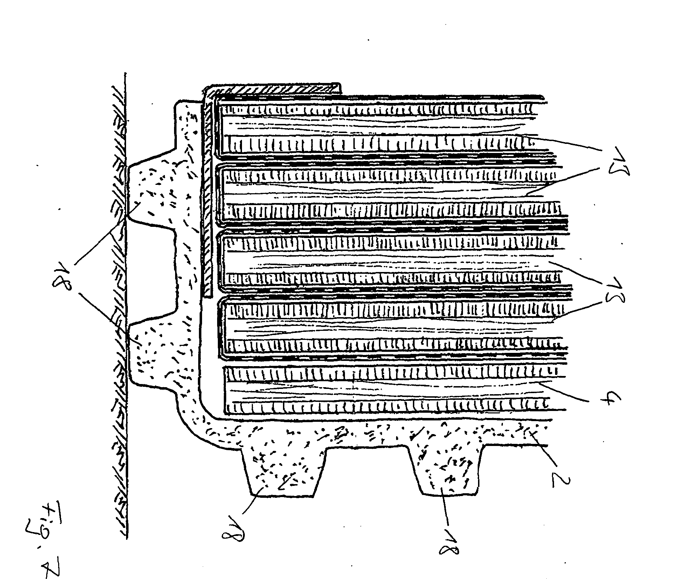

- Fig. 2: schematisch eine Draufsicht auf einen Teil des erfindungsgemässen Dämmelements,
- Fig. 3: schematisch einen senkrechten Schnitt durch das erfindungsgemässe Dämmelement,
- Fig. 4: vergrössert einen Ausschnitt aus Fig. 3,
- Fig. 5: schematisch einen waagrechten Querschnitt durch einen Teil des erfindungsgemässen Dämmelements,
- Fig. 6: vergrössert einen waagrechten Teilquerschnitt durch das erfindungsgemässe Dämmelement,
- Fig. 7: vergrössert einen Ausschnitt aus einem senkrechten Schnitt durch das erfindungsgemässe Dämmelement in einem zusammengelegten Zustand,
- Fig. 8: schematisch eine Draufsicht auf eine erste erfindungsgemässe Dämmeinrichtung,
- Fig. 9: schematisch eine Draufsicht auf eine zweite erfindungsgemässe Dämmeinrichtung,

- Fig. 10: schematisch einen Schnitt durch die zweite erfindungsgemässe Dämmeinrichtung im Einsatz und
- Fig. 11: vergrössert einen Ausschnitt aus Fig. 10.

### Wege zur Ausführung der Erfindung

Das erfindungsgemässe Dämmelement ist als Behälter 1 von rechteckiger, insbesondere quadratischer Grundfläche ausgebildet mit einem flexiblen Boden 2, der z.B. von einer Matte aus Gummi gebildet wird und einer im wesentlichen senkrechten geschlossen umlaufenden Seitenwand 3. Er ist durch einen separaten Deckel 4 mit einer Oeffnung 5 verschlossen. An der Aussenseite der Seitenwand 3 sind drei senkrecht voneinander beabstandete umlaufende Gurtringe 6 befestigt.

Die Gurtringe 6 tragen Anschlussgurte 7, an denen Schlaufen 8, 8', 8" und mit derartigen Schlaufen verhängbare Haken 9, 9', 9" befestigt sind. An zwei benachbarten Seitenflächen sind an über die ihnen gemeinsame Ecke hinausreichenden Anschlussgurten 7 die Haken 9, 9" befestigt, während an entgegengesetzt gerichteten Anschlussgurten 7, die jedoch nicht bis zur jeweils nächsten Ecke reichen, die Schlaufen 8, 8" befestigt sind, die somit vor der jeweiligen Seitenfläche liegen. An einer weiteren Seitenfläche reicht ein Anschlussgurt 7, der einen weiteren Haken 9' trägt, über eine der erstgenannten Ecke benachbarte Ecke hinaus, während ein entgegengesetzt gerichteter Anschlussgurt 7, der wiederum nicht bis zur gegenüberliegenden Ecke reicht, eine vor der Seitenfläche liegende Schlaufe 8' trägt. Die Schlaufen 8, 8', 8" und Haken 9, 9', 9" dienen, wie im Zusammenhang mit Fig. 8, 9 noch näher erläutert werden wird, als Verbindungselemente zum Verhängen benachbarter Dämmelemente zu einer Dämmeinrichtung.

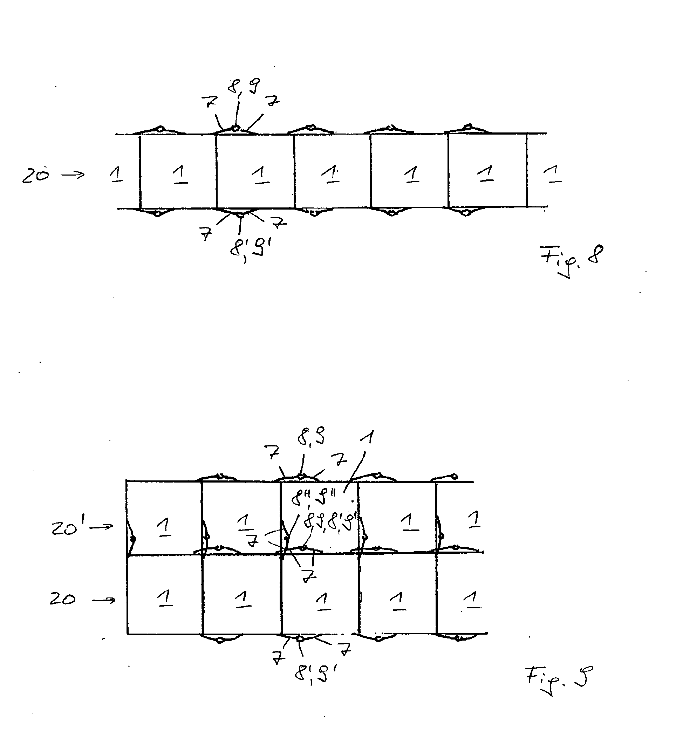

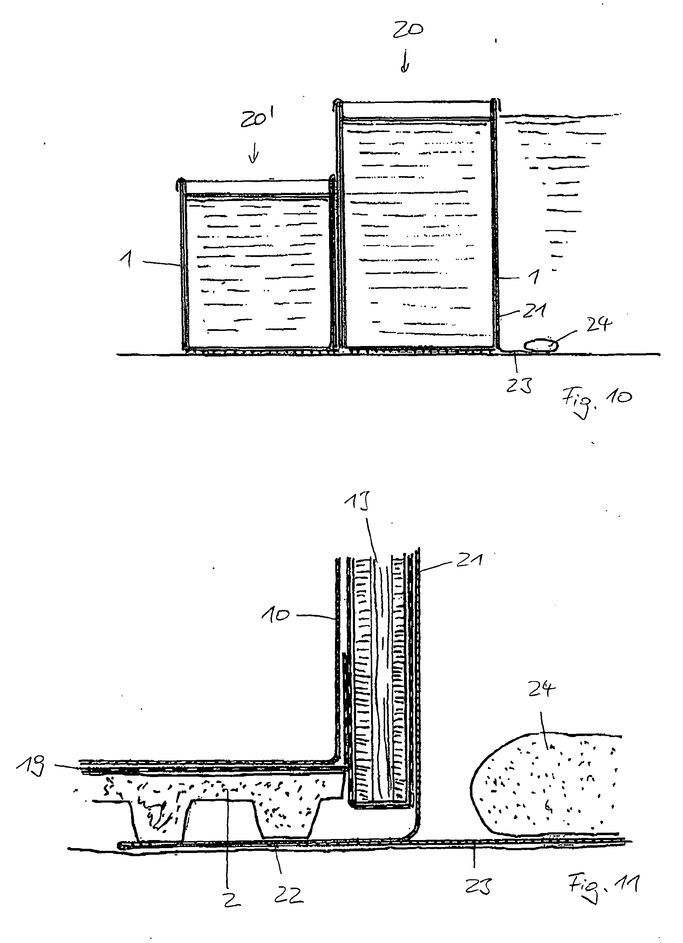

Der Behälter 1 ist mit einer wasserdichten Innenverkleidung 10 aus Folie, z.B. aus Polyethylen, ausgekleidet. Sie bedeckt die Innenseite der umlaufenden Seitenwand 3 und den Boden 2 und hängt mit einem Randstreifen über den oberen Rand des Behälters 1 nach aussen. An jener Seitenfläche, die keine Schlaufen und Haken trägt, mündet knapp über dem unteren Rand ein Ausfluss mit einer Offnung 11 in der Seitenwand 3 und einer dahinterliegenden verschliessbaren Oeffnung 12 in der Innenverkleidung 10 (s.a. Fig. 3, 4).

Die Seitenwand 3 besteht (Fig. 5) aus einer Reihe von starren, ebenen Wandabschnitten 13. Benachbarte Wandabschnitte sind stets längs der senkrechten Seitenränder, die sie einander zukehren, flexibel verbunden. So bestehen zwei einander gegenüberliegende gerade Teile der Seitenwand 3 (oben und unten in Fig. 5) jeweils aus drei Wandabschnitten 13, während die sie verbindenden geraden Teile (links und rechts in Fig. 5) jeweils aus vier Wandabschnitten 13 bestehen. Die von den Ecken ausgehenden Wandabschnitte 13 sind alle gleich lang. Deren einer gemeinsamen Ecke abgewandte Ränder sind jeweils durch eine senkrecht vom Boden 2 bis unter den Deckel 4 reichende gespannte Plane 14 verbunden, die als Stützverbindung die Form des Behälters 1 stabilisiert. Die geraden Teile der Seitenwand könnten auch oben und unten jeweils aus lediglich einem Wandabschnitt und rechts und links aus je zwei Wandabschnitten bestehen, so dass insgesamt nicht vierzehn, sondern sechs Wandabschnitte vorlägen. Bei einem dreieckigen Dämmelement wären u.U. sogar drei Wandabschnitte ausreichend.

Jeder der Wandabschnitte 13 umfasst (Fig. 6) eine beidseits mit Kunstharz beschichtete Sperrholzplatte 15. Die Sperrholzplatten 15 sind von einer Aussenfolie 16 und einer Innenfolie 17, vorzugsweise aus Polypropylen, bedeckt und zur Seitenwand 3 verbunden, welche zwischen den Wandabschnitten 13 und am unteren Rand sowie am oberen Rand der Seitenwand 3 jeweils durch geschweisste oder - vorzugsweise - genähte Nähte verbunden sind, so dass jede der Sperrholzplatten 15 in einem rundum von Nähten begrenzten Sack steckt, der die Sperrholzplatte 15 knapp umgibt. Dadurch sind benachbarte Wandabschnitte 13 an den Stossstellen gegeneinander verdrehbar, wobei die Winkel durch die Lage der Naht begrenzt sein können.

Dank der flexiblen Verbindung zwischen benachbarten Wandabschnitten 13 ist es möglich, nach Entfernen des Deckels 4 die seitlichen Teile der Seitenwand 3 nach innen zu knicken, wie in Fig. 5 gestrichelt angedeutet, und den Behälter 1 zusammenzulegen. Der mit dem unteren Rand des Wandabschnittes 13 in der Mitte oben über dessen ganze Länge verbundene Boden 2 kann dann (Fig. 7) ebenfalls umgelegt werden, wobei noch der Deckel 4 zwischen die Wandabschnitte 13 und den Boden 2 geschoben wird. In diesem Zustand kann das Dämmelement z.B. zusammen mit mehreren anderen in eine Kiste verpackt werden.

Der Boden 2 weist an der Unterseite beispielsweise runde Noppen 18 auf, die, wenn der Boden 2 auf einem Untergrund aufliegt, ein zusammenhängendes Netz von Kanälen zwischen sich freihalten, so dass etwa unter den Boden 2 eindringendes Wasser abfliessen kann und keinen Auftrieb erzeugt. Aufgrund seines Materials und der Struktur seiner Unterseite weist er z.B. auf Asphalt oder Beton einen sehr hohen Reibungskoeffizienten auf. Seine Oberseite kann von einer lose aufliegenden Bodenfolie 19 aus Polypropylen bedeckt sein. Der Deckel 4 ist als starre Platte aus beschichtetem Sperrholz ausgebildet.

Eine erfindungsgemässe Dämmeinrichtung umfasst z.B. eine Reihe gleicher erfindungsgemässer Dämmelemente, die z.B. wie in Fig. 8 dargestellt in einer Reihe 20 angeordnet sind, und zwar so, dass ebene Seitenflächen benachbarter Behälter 1 unmittelbar aneinander anliegen. An den beiden Längsseiten sind jeweils die Haken 9, 9' eines Dämmelementes mit den Schlaufen 8, 8' des nächsten Dämmelements verhängt. Die Anschlussgurten 7 sind jeweils gerade so lang, dass sie in der Regel gespannt sind.

Eine erfindungsgemässe Dämmeinrichtung kann jedoch, wie in Fig. 9, 10 dargestellt, auch aus zwei Reihen von Dämmelementen bestehen. Die Dämmelemente der vorderen, wasserseitigen Reihe sind dabei so hoch wie es nach dem zu erwartenden Wasserstand erforderlich ist, während diejenigen der hinteren Reihe etwas niedriger sind. Auch bei dieser zweidimensionalen Konfiguration liegen die ebenen Seitenflächen benachbarter Behälter 1 aneinander an. Die Haken 9, 9' eines Dämmelements sind auch hier jeweils mit den Schlaufen 8, 8' des nächsten Dämmelements in der entsprechenden Reihe 20; 20' verhängt. Zusätzlich sind Haken 9" der Dämmelemente der vorderen Reihe 20 mit Schlaufen 8" der benachbarten Dämmelemente in der hinteren Reihe 20' verhängt. Die Dämmeinrichtung ist dadurch äusserst stabil. Die Verbindungen sind bei unbefüllten Behältern 1 jeweils leicht herstellbar. Es sind keinerlei zusätzliche Elemente, insbesondere Kleinteile erforderlich.

Es können Dämmelemente mit einer Grundfläche von z.B. 1m×1m in drei verschiedenen Höhen - etwa 2,1m, 1,6m und 1,1m - vorgesehen sein, so dass Dämmeinrichtungen mit bis zu drei Reihen mit Höhenabstufung hergestellt werden können.

Wie aus Fig. 10, 11 ersichtlich, ist an der wasserseitigen Aussenseite der vorderen Reihe 20 eine wasserdichte Aussenverkleidung 21 angebracht, welche aus Folien, die vorzugsweise aus Polyethylen hergestellt sind, besteht. Eine Folie bedeckt jeweils mehrere aufeinanderfolgende Dämmelemente. Am unteren Ende ist sie jeweils unter den Boden 2 des jeweiligen Behälters 1 gezogen, wo sie eine Falte 22 bildet, die vom Behälter 1 beschwert und festgehalten ist. Ein Randstreifen 23 steht jedoch über die Aussenseite der Dämmeinrichtung vor. Er ist z.B. mit Sandsäcken 24 beschwert.

Da nicht nur der Boden 2 eines jeden Dämmelements flexibel ist, sondern auch die Seitenwand 3 zwar fest, aber nicht völlig starr ist, so passen sich die Dämmelemente gut auch an einen unebenen Untergrund an und durch jeweiliges leichtes Abdrehen eines Dämmelements gegenüber dem voraufgehenden können auch einer gekrümmten Linie folgende Dämmeinrichtungen hergestellt werden. Auch eigentliche Ecken können durch die Verbindbarkeit der Dämmelemente nach zwei Richtungen hergestellt werden, wobei es sich aber empfiehlt, wasserseitig vorstehende Ecken durch schräge Holztafeln vor dem Druck der Strömung zu schützen und Turbulenzen zu entschärfen. Bei festen Hindernissen wie Mauern oder Stufen kann wo nötig zum Längenausgleich ein Dämmelement mit nach innen geknickten Seitenwandteilen wie in Fig. 5 angedeutet eingesetzt werden. Auch in diesem Fall empfiehlt es sich, wasserseitig eine Holztafel vor dem Dämmelement anzuordnen, die an der Mauer verankert sein kann.

Die Dämmelemente können zu je zehn Stück in einer Kiste verpackt sein, die etwa mittels eines Gabelstaplers von einem Lastwagen abgeladen und in die unmittelbare Nähe des Einsatzortes gebracht wird. Dann werden die einzelnen Dämmelemente ausgepackt und mit einem Schubkarren direkt an die Einsatzstelle gefahren, wo sie aufgeklappt werden. Die Innenverkleidung 10 ist vorzugsweise schon im Behälter 1 eingefaltet. Die Dämmelemente werden in beschriebener Weise mittels der Schlaufen 8, 8', 8" und Haken 9, 9', 9" zu einer Dämmeinrichtung verbunden, die Aussenverkleidung 21 montiert und dann die Deckel 4 aufgesetzt, wodurch zugleich die Innenverkleidungen 10 und wasserseitig auch die Aussenverkleidung 21 festgeklemmt werden.

Dann wird jedes Dämmelement durch die Oeffnung 5 im Deckel 4 mit Wasser gefüllt. Die Behälter 1 werden, da sie nicht ganz starr sind, durch das Befüllen mit Wasser gewöhnlich etwas deformiert, so dass benachbarte Dämmelemente fest aneinander anliegen. Dadurch ist die Dämmeinrichtung selbst bei Beschädigung der wasserdichten Aussenverkleidung 21 recht dicht. Die Deckel 4 werden durch die Deformation der Behälter 1 etwas verklemmt, so dass sie fest auf denselben sitzen und die Anschlussgurte 7 gespannt. Die Befüllung kann sich nach der zu erwartenden Höhe der Flut richten. So müssen ewta 2,1m hohe Dämmelemente nicht unbedingt ganz gefüllt werden. Steigt das Wasser dann höher, ist ein Nachfüllen ohne weiteres möglich. Die Dämmeinrichtung kann wenn nötig sogar nachträglich weiter erhöht werden, indem auf den Deckeln 4 Sandsäcke und Bretter angeordnet werden.

Zum Abbau der Dämmeinrichtung werden an jenem Ende, wo die Ausflüsse der Dämmelemente freiliegen, die verschliessbaren Oeffnungen 12 der Innenverkleidungen 10 geöffnet und die entsprechenden Dämmelemente geleert, die Innenauskleidungen 10 entfernt und die Behälter 1 zusammengelegt und verpackt. Dadurch werden die Ausflüsse der nächsten Dämmelemente freigelegt, so dass nun diese geleert und zusammengelegt werden können usw.. Später können die Behälter 1 ausgepackt, mit Wasser gereinigt, getrocknet und wieder verpackt werden. Die Innenverkleidungen 10 können ebenfalls gereinigt und wiederverwendet oder, da die Kosten verhältnismässig gering sind, ersetzt werden.

### Bezugszeichenliste

- 1: Behälter
- 2: Boden
- 3: Seitenwand
- 4: Deckel
- 5: Oeffnung
- 6: Gurtring
- 7: Anschlussgurt
- 8,8',8": Schlaufe
- 9,9',9": Haken
- 10: Innenverkleidung
- 11: Oeffnung
- 12: verschliessbare Oeffnung
- 13: Wandabschnitt
- 14: Plane
- 15: Sperrholzplatte
- 16: Aussenfolie
- 17: Innenfolie
- 18: Noppe
- 19: Bodenfolie
- 20, 20': Reihe
- 21: Aussenverkleidung
- 22: Falte
- 23: Randstreifen
- 24: Sandsack

## Patentansprüche

1. Dämmelement zum Abdämmen von Flüssigkeiten, welches als mit Wasser befüllbarer Behälter (1) mit auf dem Untergrund aufliegendem Boden (2) und einer umlaufenden Seitenwand (3) ausgebildet ist, **dadurch gekennzeichnet, dass** die Seitenwand (3) aus mehreren starren, ebenen Wandabschnitten (13) zusammengesetzt ist, welche jeweils von einem an den Boden (2) angrenzenden unteren Rand bis zu einem oberen Rand des Behälters (1) durchgehend ausgebildet und an den Seitenrändern mit dem jeweils benachbarten Wandabschnitt (13) flexibel verbunden sind.

2. Dämmelement nach Anspruch 1, **dadurch gekennzeichnet, dass** die Wandabschnitte (13) jeweils rechteckig sind.

3. Dämmelement nach Anspruch 1 oder 2, **dadurch gekennzeichnet, dass** die Zahl der Wandabschnitte (13) mindestens vier, vorzugsweise mindestens sechs beträgt.

4. Dämmelement nach einem der Ansprüche 1 bis 3, **dadurch gekennzeichnet, dass** jeder Wandabschnitt (13) eine Platte aus festem Material umfasst sowie einen aus flexibler Folie bestehenden Sack, welcher die Platte eng umgibt.

5. Dämmelement nach Anspruch 4, **dadurch gekennzeichnet, dass** die Folie aus Polypropylen besteht.

6. Dämmelement nach Anspruch 4 oder 5, **dadurch gekennzeichnet, dass** die Gesamtheit der Säcke aus einer einzigen Innenfolie (17) und einer einzigen Aussenfolie (16) besteht, die zur Abteilung der einzelnen Säcke durch Nähte verbunden sind.

7. Dämmelement nach einem der Ansprüche 1 bis 6, **dadurch gekennzeichnet, dass** die Seitenwand (3) an der Innenseite flexible Stützverbindungen aufweist, welche zwischen zwei Wandabschnitten (13) ausgespannt sind.

8. Dämmelement nach einem der Ansprüche 1 bis 7, **dadurch gekennzeichnet, dass** der Boden (2) aus flexiblem Material, vorzugsweise Gummi, besteht.

9. Dämmelement nach Anspruch 8, **dadurch gekennzeichnet, dass** der Boden an der Unterseite Noppen (18) aufweist.

10. Dämmelement nach einem der Ansprüche 1 bis 9, **dadurch gekennzeichnet, dass** der Boden (2) rechteckig, insbesondere quadratisch ist.

11. Dämmelement nach einem der Ansprüche 1 bis 10, **dadurch gekennzeichnet, dass** der untere Rand eines der Wandabschnitte (13) an seiner ganzen Länge mit einem Randabschnitt des Bodens (2) verbunden ist.

12. Dämmelement nach einem der Ansprüche 1 bis 11, **dadurch gekennzeichnet, dass** es eine aus Folie, vorzugsweise aus Polyethylen, bestehende wasserdichte Innenverkleidung (10) umfasst.

13. Dämmelement nach einem der Ansprüche 1 bis 12, **dadurch gekennzeichnet, dass** es einen vorzugsweise starren, ebenen Deckel (4) zum Verschliessen einer vom oberen Rand des Behälters (1) umgebenen Oeffnung umfasst.

14. Dämmelement nach einem der Ansprüche 1 bis 13, **dadurch gekennzeichnet, dass** an der Seitenwand (3) Verbindungsgelemente zur Verbindung mit benachbarten Dämmelementen angeordnet sind.

15. Dämmelement nach Anspruch 14, **dadurch gekennzeichnet, dass** die Verbindungselemente mit umlaufenden Gurtringen (6) verbunden sind.

16. Dämmelement nach Anspruch 14 oder 15, **dadurch gekennzeichnet, dass** die Verbindungselemente an den Enden von Anschlussgurten (7) angebracht sind.

17. Dämmelement nach einem der Ansprüche 14 bis 16, **dadurch gekennzeichnet, dass** die Verbindungselemente zum Teil als Schlaufen (8, 8', 8") und zum Teil als mit derartigen Schlaufen verhängbare Haken (9, 9', 9") ausgebildet sind.

18. Dämmeinrichtung, welche mindestens eine erste Reihe (20) mit ebenen Teilen ihrer Seitenwände (3) aneinander stossender und miteinander verbundener Dämmelemente nach einem der Ansprüche 1 bis 17 umfasst.

19. Dämmeinrichtung nach Anspruch 18, **dadurch gekennzeichnet, dass** sie wasserseitig eine sich über mehrere Dämmelemente erstreckende, aus einer Folie, vorzugsweise aus Polyethylen, bestehende Aussenverkleidung (21) umfasst, welche jeweils die wasserseitige Aussenseite der Seitenwand (3) bedeckt, unter dem Boden (2) eine Falte (22) bildet und über die Aussenseite vorsteht.

20. Dämmeinrichtung nach Anspruch 18 oder 19, **dadurch gekennzeichnet, dass** landseitig unmittelbar hinter der ersten Reihe (20) eine zweite Reihe (20') von Dämmelementen angeordnet ist, welche mit ebenen Teilen ihrer Seitenwände (3) aneinander und an Dämmelemente der ersten Reihe (20) stossen und miteinander und mit Dämmelementen der ersten Reihe (20) verbunden sind, wobei vorzugsweise die Höhe der Dämmelemente nach der Landseite hin abnimmt.
